(19) Europäisches Patentamt
European Patent Office
Office européen des brevets

(11) Numéro de publication : **0 491 639 A1**

# (12) DEMANDE DE BREVET EUROPEEN

(21) Numéro de dépôt : 91460052.3

(22) Date de dépôt : 09.12.91

(51) Int. Cl.$^5$ : **G06K 19/06**

(30) Priorité : **17.12.90 FR 9015897**

(43) Date de publication de la demande :
**24.06.92 Bulletin 92/26**

(84) Etats contractants désignés :
**BE CH DE ES GB IT LI NL SE**

(71) Demandeur : **TELECOM SYSTEMES MOBILES SA**
**66, Avenue du Maine**
**F-75014 Paris (FR)**

(72) Inventeur : **Audoli, Daniel**
**66, Avenue du Maine**
**F-75014 Paris (FR)**
Inventeur : **Tyrode, Yves**
**66, Avenue du Maine**
**F-75014 Paris (FR)**

(74) Mandataire : **Le Guen, Louis François**
**CABINET Louis LE GUEN 38, rue Levavasseur**
**B.P. 91**
**F-35802 Dinard Cédex (FR)**

(54) **Carte portative de réception de messages personnels.**

(57)    La présente invention concerne une carte électronique portative comportant un connecteur (2) auquel est relié, dans la carte, un circuit électronique (3), ladite carte pouvant être introduite dans un appareil de lecture (15) comportant un circuit d'utilisation (21). Le circuit électronique (3) de la carte comprend :
    un récepteur radiofréquence (5), et
    une unité de traitement (10) dont une entrée est reliée à la sortie (9) dudit récepteur (5), ladite unité (10) comportant un bus (11) auquel est reliée une mémoire (12) où est stocké un code d'identification propre à la carte, la sortie de ladite unité (10) étant reliée, par un bus (13), via le connecteur (2), au circuit d'utilisation (21) de l'appareil de lecture (15).
    Le récepteur (5) est prévu pour recevoir des signaux de données émis par un système de radiomessagerie.

FIG.3

EP 0 491 639 A1

La présente invention concerne une carte portative de réception de messages personnels, ladite carte ayant, par exemple, sensiblement les mêmes dimensions qu'une carte de crédit et pouvant être introduite dans un appareil de lecture qui décode lesdits messages personnels et les traite en vue de leur exploitation.

On connaît des systèmes d'envoi de messages personnels tels que les systèmes de radiomessagerie dans lesquels un central émet via un réseau hertzien un message qui est destiné à un ou plusieurs dispositifs de réception déterminés parmi plusieurs. Dans chacun de ces dispositifs, est stocké un code d'identification. Les messages ainsi transmis par ces systèmes sont associés au code d'identification du dispositif auquel ils sont destinés. A leur réception par un dispositif de réception et si le code d'identification stocké dans ce dispositif correspond au code reçu, ils sont décodés et affichés sur un écran.

Les dispositifs existants à l'heure actuelle présentent l'inconvénient d'être assez volumineux, ceci du fait qu'ils sont autonomes et réalisent des fonctions d'affichage aux éléments encombrants.

On a donc cherché à améliorer les dispositifs de réception de ces systèmes et, en particulier, à réduire leurs dimensions et on est arrivé à développer un nouveau produit, objet de la présente invention.

Selon l'invention, les composants électroniques de réception et de décodage des messages transmis par un système de radiomessagerie sont logés dans une carte portative, par exemple, de mêmes dimensions que celles d'une carte de crédit. Les fonctions de réception et de décodage sont prévues dans chaque carte tandis que les fonctions d'exploitation, telles que celles d'affichage, en sont exclues. La carte reçoit, d'une antenne d'un appareil de lecture, les signaux de message et délivre à cet appareil l'information utile. L'appareil de lecture peut alors réaliser les fonctions d'exploitation de ces informations.

Les caractéristiques de la carte portative de l'invention sont telles qu'on peut envisager de nombreuses applications dans lesquelles des messages ou des données transmis ne sont plus forcément affichés sur un écran, mais peuvent être, par exemple, exploités par un appareil spécialisé. Toutes ces applications tirent profit du fait qu'à chaque carte est attribué un code d'identification individuel qui sert à allouer, à une carte donnée plutôt qu'à une autre, un message ou des données transmis par un central d'un système de radiomessagerie. Le code d'identification d'une carte correspond, en réalité, à son numéro d'appel dans ce système.

Ces applications mettent aussi à profit le fait que c'est la carte portative, qui contient le code d'identification. Elle est donc personnalisée alors que l'appareil de lecture est le même pour toutes les cartes du même type. L'utilisateur peut donc utiliser toujours la même carte mais se servir, pour des lectures successives de messages transmis ou pour leurs exploitations, de plusieurs appareils distincts se trouvant, par exemple, en des lieux différents.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue d'une carte selon l'invention,

la Fig. 2 est un schéma synoptique du circuit électronique qui équipe une carte selon l'invention, et

la Fig. 3 représente un appareil de lecture de cartes selon l'invention, une carte ayant été introduite dans ledit appareil.

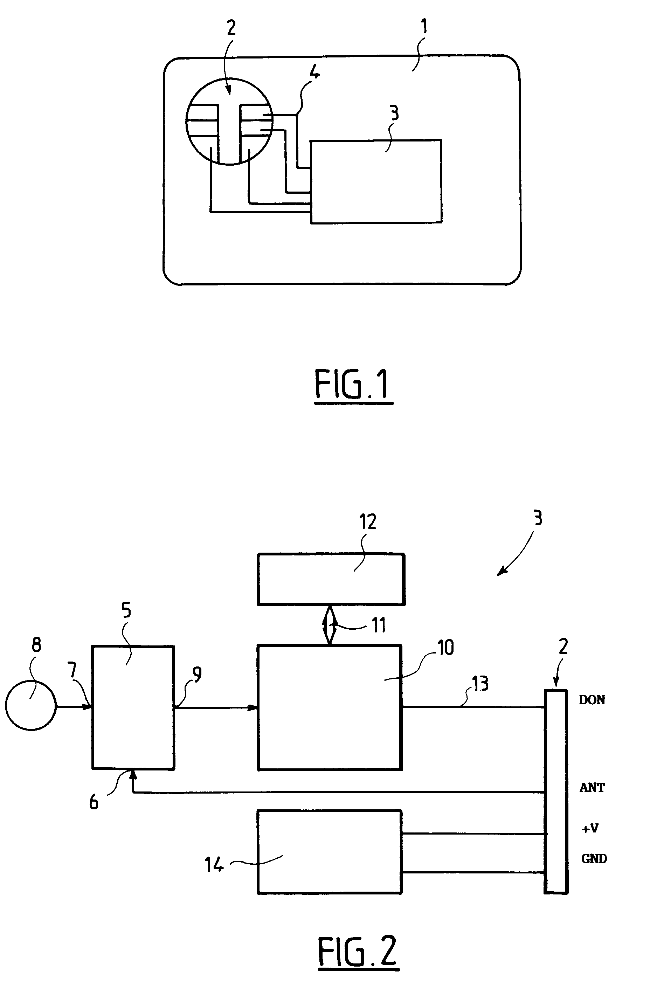

On a représenté à la Fig. 1 une carte portative 1 comprenant un connecteur 2. Elle a, par exemple, sensiblement les mêmes dimensions qu'une carte de crédit.

Elle est équipée d'un circuit électronique 3 relié, au moyen de fils 4, aux contacts du connecteur 2. Le schéma synoptique du circuit 3 est représenté à la Fig. 2 avec le connecteur 2.

Le circuit 3 comprend un récepteur radiofréquence 5 dont une entrée 6 est reliée à un contact ANT du connecteur 2 destiné à recevoir, comme on le verra par la suite, la sortie d'une antenne. Une autre entrée 7 du récepteur 5 est reliée à un oscillateur 8 qui est prévu pour fonctionner à une fréquence comprise par exemple entre 10 MHz et 900 MHz et qui est destiné à délivrer un signal de démodulation à cette fréquence au récepteur 5. Il est, par exemple, piloté par quartz ou muni d'un système à balayage de fréquence. Le récepteur 5 est avantageusement du type qui peut recevoir les signaux issus de systèmes d'appel de personne ou de système de radiomessagerie numériques ou alphanumériques utilisant les réseaux EUROSIGNAL [R], ALPHAPAGE [R], RDS [R], GOLAY [R], ERMES [R], ATE [R], etc.

Sur sa sortie 9, le récepteur 5 fournit un signal en bande de base. Dans le cas de l'utilisation d'un récepteur pouvant démoduler les signaux issus des réseaux ALPHAPAGE [R], par exemple, le signal sur la sortie 9 est constitué d'une trame du type POCSAG comportant un message ou une partie de message, associé à un code d'identification du destinataire de ce message. Ce signal est sous forme d'un train de bits.

Notons que l'association d'un code d'identification et d'un message peut être réalisée de différentes manières parmi lesquelles on peut citer les procédés à en-tête comportant ce code, les procédés à entrelaçage de trames, ou les procédés à canaux sémaphores.

On trouve également une unité de traitement 10 reliée, par une de ses entrées, à la sortie 9 du récepteur 5 et pourvue d'un bus 11 auquel est raccordée une mémoire 12 par exemple du type EEPROM, RAM, etc. Dans cette mémoire, est stocké le code d'identification qui est attribué à une carte et qui lui est propre. L'unité 10 est reliée à un bus de sortie comprenant une ligne 12 qui peut être multifilaire et qui est reliée à au moins un contact DON du connecteur 2.

Un dispositif d'alimentation 14 est relié aux contacts +V et GND du connecteur 2 d'où il reçoit la tension de l'appareil de lecture sur lequel est montée la carte décrite. Le dispositif d'alimentation 14 est prévu pour alimenter le récepteur 5, l'oscillateur 8, l'unité de traitement 10 et la mémoire 12.

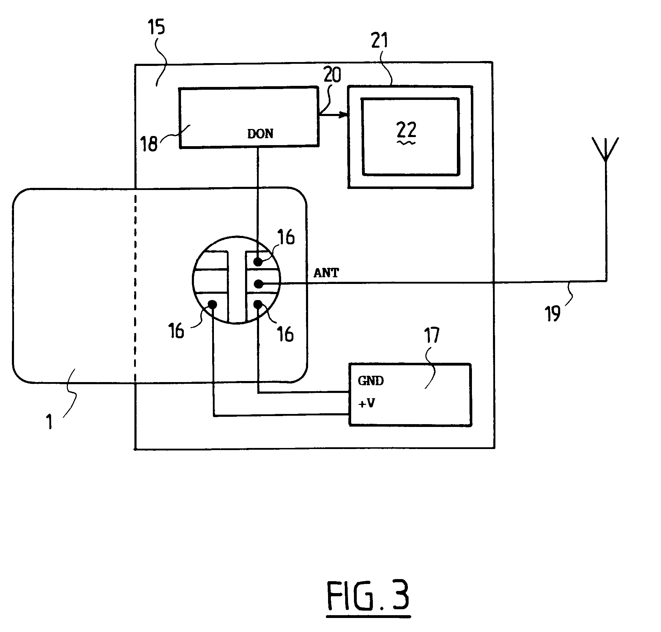

Les applications d'une carte selon l'invention peuvent être nombreuses. Dans ces applications, elle est introduite dans un appareil de lecture 15 (Fig. 3) dont les plots 16 se connectent sur les contacts du connecteur 2 de la carte 1. L'appareil de lecture 15 comprend une alimentation 17 dont les sorties +V et GND sont respectivement reliées aux plots 16 qui se raccordent sur les contacts correspondants de la carte 1, une unité de décodage 18 dont l'entrée DON est reliée au plot 16 (ou aux plots si la ligne est multifilaire) connecté au contact correspondant de la carte et une antenne 19 reliée au plot 16 connecté au contact ANT de la carte 1. La sortie 20 de l'unité de traitement 18 est reliée à un circuit d'exploitation 21 qui peut être, par exemple, un dispositif d'affichage muni d'un écran 22. Il pourrait également s'agir d'un synthétiseur de parole, d'une imprimante, d'un micro-ordinateur ou d'un dispositif de commande de processus, etc., ou de tout autre dispositif prévu pour recevoir des données ou des instructions codées et les exploiter de manière prédéterminée.

Le fonctionnement d'un appareil 15 dans lequel est introduite une carte 1 selon l'invention est maintenant décrit.

Notons que la carte 1 est alimentée au moyen de ses contacts +V et GND par l'alimentation 17.

L'appareil 15 utilise un réseau de radiomessagerie qui peut émettre des signaux en bande de base modulés sur une porteuse. Les signaux en bande de base sont composés d'une suite de trames comprenant un message ou une partie d'un message associé, d'une manière ou d'une autre, au code d'identification du destinataire de ce message.

L'antenne 19 peut capter ces signaux qui se retrouvent alors, via le contact ANT du connecteur 2 de la carte 1, sur l'entrée 6 du récepteur 5. Ce dernier, accordé au moyen de l'oscillateur 8 sur la fréquence de la porteuse du réseau, soit automatiquement, soit de manière prédéterminée, les démodule et les délivre alors, sur sa sortie 9, sous la forme d'un signal en bande de base. L'unité de traitement 10 extrait de ce signal le code d'identification associé au message de la trame correspondante. Si ce code est le même que celui stocké dans la mémoire 12, le message contenu dans cette trame est traité par l'unité 10, qui, par exemple, peut le délivrer, sur le contact DON du connecteur 2. Les messages sont alors disponibles sur l'entrée DON de l'unité 18 de l'appareil de lecture 15 dans lequel est introduite la carte 1.

Si le code d'identification associé au message de la trame reçue ne correspond pas au code stocké dans la mémoire 12, le message n'est pas utilisé par l'unité 10 qui ne délivre alors aucun signal sur l'entrée DON du circuit 18.

Par la ligne 12, l'unité 10 peut transmettre non seulement des données directement en relation avec les messages reçus, mais aussi, sous forme codée, des instructions pour l'appareil 15 dans lequel elle est introduite et, en particulier, pour le circuit 18 de cet appareil. Par ailleurs, un fil de la ligne 12 peut être prévu pour la synchronisation de l'appareil 15 et du circuit 18.

Le circuit 18 délivre, sur sa sortie 20, les données présentes sur son entrée DON sous une forme qui est utilisable par le circuit d'exploitation 21 et selon les instructions qu'a pu lui transmettre l'unité 10.

A titre d'exemple et sans vouloir se limiter à cette application particulière, on décrit l'utilisation de l'invention avec un combiné téléphone mobile du type de celui commercialisé sous la marque POINTEL qui, classiquement, ne peut émettre que des messages vocaux mais ne peut en recevoir. Ce combiné téléphonique est alors équipé d'un appareil du type de celui décrit précédemment dont le circuit d'exploitation 21 est un dispositif d'affichage avec un écran 22. Lorsqu'une carte selon l'invention est introduite dedans, ce combiné ainsi équipé peut recevoir des messages et les afficher sur cet écran.

L'avantage de l'utilisation d'une carte selon l'invention réside dans le fait que celle-ci n'est pas très coûteuse et qu'elle est portable. Le code d'identification est lié à son utilisateur et non pas au combiné téléphonique dans lequel elle est introduite.

Parmi d'autres applications, on peut également citer, à titre d'exemple, le cas où le circuit d'exploitation 21 est un microordinateur muni d'un écran. Dans ce cas, les messages qu'un correspondant envoie au détenteur d'une carte peuvent apparaître, par exemple, en superposition sur cet écran. Si le détenteur désire travailler sur un autre microordinateur également équipé d'un appareil 15, il retire sa carte du premier et la réintroduit dans l'appareil du second. Son correspondant, en appelant toujours le même numéro, peut ainsi lui envoyer un second message qui s'affichera alors sur l'écran du second microordinateur.

## Revendications

**1)** Carte électronique portative comportant un connecteur (2) auquel est relié, dans la carte, un circuit électronique (3), ladite carte pouvant être introduite dans un appareil de lecture (15) comportant un circuit d'utilisation (21), tel qu'un combiné de téléphone mobile ou un microordinateur, ledit circuit d'utilisation (21) étant relié à des plots (16) pouvant se connecter sur les contacts du connecteur (2) de la carte, caractérisée en ce que le circuit électronique (3) de la carte comprend:

un récepteur radiofréquence (5) dont une première entrée (6) est destinée à recevoir, via un contact (ANT) du connecteur (2), les signaux d'une antenne (19) de l'appareil de lecture (15) et dont une autre entrée (7) est reliée à un oscillateur (8) délivrant au récepteur (5) un signal à la fréquence de démodulation, et

une unité de traitement (10) dont une entrée est reliée à la sortie (9) dudit récepteur (5), ladite unité (10) comportant un bus (11) auquel est reliée une mémoire (12) où est stocké un code d'identification propre à la carte, la sortie de ladite unité (10) étant reliée, par un bus (13), via le connecteur (2), au circuit d'utilisation (21) de l'appareil de lecture (15),

le récepteur (5) étant prévu pour recevoir des signaux de données émis par un système de radiomessagerie qu'il délivre en bande de base à l'unité de traitement (10), les données transmises par ledit système se composant d'un message, associé à un code d'identification du destinataire dudit message, l'unité de traitement (10) étant prévue pour fournir ledit message audit circuit d'utilisation (21) seulement lorsque le code d'identification associé au message transmis correspond au code d'identification stocké dans la mémoire (12).

**2)** Carte selon la revendication 1, caractérisée en ce qu'elle présente des dimensions sensiblement égales aux dimensions d'une carte de crédit.

## FIG.1

## FIG.2

FIG.3

EP 0 491 639 A1

Office européen
des brevets

**RAPPORT DE RECHERCHE EUROPEENNE**

Numero de la demande

EP    91 46 0052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 267 085 (AUDEBERT) <br> * le document en entier * <br> --- | 1-2 | G06K19/06 |
| Y | FR-A-2 604 808 (BAZIN G.) <br> * le document en entier * <br> --- | 1-2 | |
| A | EP-A-0 138 219 (KABUSHIKI KAISHA TOSHIBA) <br> * abrégé; revendications 1-5; figures 1-5 * <br> --- | 1-2 | |
| A | FR-A-2 636 153 (PARIENTI R.) <br> * le document en entier * <br> --- | 1-2 | |
| A | WO-A-8 803 294 (CALL-IT CO.) <br> * abrégé; revendications 1-17; figure 1 * <br><br> ----- | 1-2 | |

**DOMAINES TECHNIQUES RECHERCHES (Int. Cl.5 )**

G06K
G07F

Le présent rapport a été établi pour toutes les revendications

| Lieu de la recherche | Date d'achèvement de la recherche | Examinateur |
|---|---|---|
| LA HAYE | 28 FEVRIER 1992 | BEAUCE G.Y.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0403)

7